# EUROPÄISCHE PATENTANMELDUNG

(11) **EP 3 104 054 A1**
(43) Veröffentlichungstag der Anmeldung: **14.12.2016**
(21) Anmeldenummer: 15171174.4
(22) Anmeldetag: 09.06.2015
(51) Int. Cl.: F16K 15/02

(54) **RÜCKSCHLAGVENTIL**

(71) Anmelder: Siemens Aktiengesellschaft, 80333 München (DE)
(72) Erfinder: Waruschewski, Andreas, 46242 Bottrop (DE)

(57) **Zusammenfassung**

Rückschlagventil (1) umfassend ein strömungsbegrenzendes äußeres Bauteil (10) mit einer ersten Öffnung (11) und ein darin angeordnetes strömungskonditionierendes inneres Bauteil (20) mit einer zweiten Öffnung (21) und einer dritten Öffnung (22), wobei das innere Bauteil (20) in dem äußeren Bauteil (10) beweglich gelagert ist und in einem ersten Betriebszustand (B1) derart in dem äußeren Bauteil (10) angeordnet ist, dass nur die zweite Öffnung (21) den Öffnungsquerschnitt des gesamten Rückschlagventils (1) bestimmt und in einem zweiten Betriebszustand (B2) derart in dem äußeren Bauteil (10) angeordnet ist, dass neben der zweiten Öffnung (21) auch die dritte Öffnung (22) den Öffnungsquerschnitt des gesamten Rückschlagventils (1) mitbestimmt.

## Beschreibung

Die vorliegende Erfindung betrifft ein Rückschlagventil, ein Brennstoffleitungssystem, umfassend ein solches Rückschlagventil sowie eine Gasturbine, welche ihrerseits ein derartiges Brennstoffleitungssystem aufweist.

Rückschlagventile sind in der Fluidtechnik auf vielerlei Weisen ausgestaltet. Zahlreiche Rückschlagventile ermöglichen hierbei, einen Rückfluss eines Strömungsmediums in einem Leitungsabschnitt zu verhindern. Andere Rückschlagventile betreffen Ventilanordnungen, welche aufgrund sich ändernder Strömungsverhältnisse bzw. Druckverhältnisse in dem Leitungsabschnitt einen Schaltvorgang ausführen. Dieser Schaltvorgang führt typischerweise seinerseits zu einer Veränderung der Strömungsverhältnisse in dem betreffenden Ventil. Hierbei kann ein Rückfluss von Strömungsmedium in dem Leitungsabschnitt verhindert werden, muss dies jedoch nicht.

Vorliegend soll ein Rückschlagventil gemäß der letzteren Darstellung verstanden werden, wobei ein solches aufgrund von sich ändernden Strömungs- bzw. Druckverhältnissen in dem Leitungsabschnitt bzw. dem Ventil selbst ein Schaltvorgang ausgeführt wird, welcher zu einer Strömungskonditionierung führt.

Werden Strömungskraftmaschinen, etwa Gasturbinen, mit einem Brennstoff beschickt, ist es erforderlich, diesen auf eine Anzahl von Brennern zu verteilen. Die Druckversorgung in dem Brennstoffleitungssystem übernimmt hierbei eine geeignete Pumpe. Die Brenner stationärer Gasturbinen sind zudem typischerweise auf unterschiedlichen geodätischen Höhen angeordnet, wodurch der Brennstoffdruck in dem gesamten Brennstoffleitungssystem variieren kann. Insbesondere, wenn derartige Strömungskraftmaschinen mit verhältnismäßig schwerem Heizöl beschickt werden, führt der Höhenunterschied zwischen einzelnen Brennern dazu, dass die verhältnismäßig tiefer liegenden Brenner unter einem höheren Druck beschickt werden als die weiter oben liegenden. Aufgrund dieses Druckunterschiedes werden die verhältnismäßig tiefer liegenden Brenner mit relativ mehr Brennstoff beschickt, so dass auch bei Betrieb der Strömungskraftmaschine aufgrund der unterschiedlichen Brennstoffmengen verschiedene Temperaturen an den einzelnen Brennern resultieren können. Insbesondere beim Zündvorgang derartiger Strömungskraftmaschinen mit Heizöl können sich dadurch Temperaturdifferenzen ausbilden, welche außerhalb der zulässigen Toleranzen liegen.

Um zu vermeiden, dass die Flammen der verhältnismäßig niedriger liegenden Brenner relativ höhere Verbrennungstemperaturen aufweisen, werden typischerweise sogenannte Flow-Divider (Flussteiler) eingesetzt. Die Flow-Divider umfassen mehrere gekoppelte, passiv betriebene Zahnradpumpen, die für eine Gleichverteilung von Brennstoff in den einzelnen Brennerzuleitungen sorgen sollen. Eine Gleichverteilung wird jedoch meistens nur innerhalb der Fertigungstoleranzen erreicht, die mitunter für den Betrieb einer Strömungskraftmaschine signifikant sind. Weiterhin sind derartige Flow-Divider verhältnismäßig teuer, so dass diese Bauteile durchaus merkliche Kostenanteile an den Gesamtkosten einer solchen Strömungskraftmaschine haben können.

Aufgabe der vorliegenden Erfindung ist es, ein Einstellelement vorzuschlagen, welches die Funktion eines Flow-Dividers etwa bei einer Strömungskraftmaschine ersetzen kann. Insbesondere soll ein Einstellelement vorgeschlagen werden, welches die gezielte Einstellung der Strömungsrate eines Strömungsmediums in einem Leitungssystem erlaubt, wobei die Einstellung aufgrund der sich ändernden Strömungsverhältnisse bzw. Druckverhältnisse in dem Leitungssystem erreicht werden soll.

Diese der Erfindung zugrundeliegenden Aufgaben werden gelöst durch ein Rückschlagventil gemäß Anspruch 1 sowie durch ein Brennstoffleitungssystem gemäß Anspruch 12 wie auch durch eine Gasturbine gemäß Anspruch 13.

Die der Erfindung zugrundeliegenden Aufgaben werden gelöst durch ein Rückschlagventil umfassend ein strömungsbegrenzendes äußeres Bauteil mit einer ersten Öffnung und ein darin angeordnetes strömungskonditionierendes inneres Bauteil mit einer zweiten Öffnung und einer dritten Öffnung, wobei das innere Bauteil in dem äußeren Bauteil beweglich gelagert ist, und in einem ersten Betriebszustand derart in dem äußeren Bauteil angeordnet ist, dass nur die zweite Öffnung den Öffnungsquerschnitt des gesamten Rückschlagventils bestimmt und in einem zweiten Betriebszustand derart in dem äußeren Bauteil angeordnet ist, dass neben der zweiten Öffnung auch die dritte Öffnung den Öffnungsquerschnitt des gesamten Rückschlagventils mitbestimmt.

Weiterhin werden die der Erfindung zugrundeliegenden Aufgaben durch ein Brennstoffleitungssystem gelöst, umfassend ein solches vorab wie auch nachfolgend dargestelltes Rückschlagventil, wobei das Rückschlagventil zur Strömungskonditionierung in dem Brennstoffleitungssystem vorgesehen ist.

Weiterhin werden die der Erfindung zugrundeliegenden Aufgaben gelöst durch eine Gasturbine umfassend ein Brennstoffleitungssystem wie es vorab und auch nachfolgend dargestellt ist, welches dazu ausgebildet ist, die Gasturbine mit Brennstoff zu versorgen.

An dieser Stelle ist darauf hinzuweisen, dass die erfindungsgemäße zweite Öffnung und dritte Öffnung nicht identische Öffnungen sind. Insofern weisen die beiden Öffnungen eine unterschiedliche Materialumgrenzung auf.

Weiterhin ist darauf hinzuweisen, dass der erste und zweite Betriebszustand es erfordern, dass das Rückschlagventil von einer Strömung beaufschlagt ist, wobei die Strömungsrate bei dem zweiten Betriebszustand typischerweise größer ist, als bei dem ersten Betriebszustand. In anderen Worten sind beide Betriebszustände nicht identisch, insbesondere nicht mit einem Ruhezustand, in welchem das Rückschlagventil frei von einer Strömungsbeaufschlagung wäre.

Für die Betriebszustände ist weiterhin eine einheitliche Strömungsrichtung vorgesehen, welche der Fachmann leicht ermitteln kann. Wie sich aus der Funktion der nachfolgenden Darstellung des Rückschlagventils weiter ergibt, ist das Rückschlagventil lediglich sinnvoll in einer Strömungsrichtung einsetzbar. Eine Strömungsunterbrechung bei Umkehrung der Strömungsrichtung ist jedoch vorliegend nicht vorgesehen.

Das erfindungsgemäße Rückschlagventil bedient sich eines beweglich gelagerten inneren Bauteils in einem äußeren Bauteil, wobei die Lagerung aufgrund des Strömungsdrucks bei einer vorbestimmten Strömungsrate entsprechend beeinflusst werden kann. Insofern sind auch wenigstens zwei Betriebszustände vorgesehen, nämlich ein erster Betriebszustand, bei welchem lediglich die zweite Öffnung des inneren Bauteils den Öffnungsquerschnitt zur Konditionierung der Strömungsrate vorgibt und ein zweiter Betriebszustand, welcher die Strömungsrate nach Freigabe der dritten Öffnung zusätzlich zur zweiten Öffnung und damit durch einen geänderten Gesamtöffnungsquerschnitt mitbestimmt.

In dem zweiten Betriebszustand ist hierbei typischerweise ebenfalls die erste Öffnung des äußeren Bauteils ein strömungskonditionierendes Element. In anderen Worten, bestimmt typischerweise ebenfalls die erste Öffnung des äußeren Bauteils den Gesamtöffnungsquerschnitt des Rückschlagventils zu einem bestimmten Zeitpunkt mit. Ist der Gesamtöffnungsquerschnitt der ersten Öffnung jedoch deutlich größer als der Öffnungsquerschnitt der zweiten Öffnung (mindestens doppelt so groß) kann dessen Einfluss auf die Strömungskonditionierung im Vergleich zu der zweiten Öffnung vernachlässigbar sein. Im Wesentlichen wird also bei dem zweiten Betriebszustand die Strömungskonditionierung aufgrund der Strömungsbegrenzung durch die zweite und dritte Öffnung bestimmt. Bei Übergangsbetriebszuständen zwischen dem ersten Betriebszustand und dem zweiten Betriebszustand kann jedoch mitunter der erste Öffnungsquerschnitt der ersten Öffnung durchaus mit zu berücksichtigen sein.

Das vorliegende Rückschlagventil konditioniert die Strömungsrate des Strömungsmediums während des ersten Betriebszustandes lediglich durch die zweite Öffnung, welche nach Erreichen des zweiten Betriebszustandes durch eine weitere dritte Öffnung noch ergänzt wird. Die Änderung des Betriebszustandes und damit der Einstellung des Rückschlagventils resultiert aus einer Druckänderung in dem Rückschlagventil. So bewegt sich nämlich mit zunehmendem Strömungsdruck das innere Bauteil von einer Position, in welcher lediglich die zweite Öffnung die Strömungskonditionierung bestimmt, in eine Position, in welcher die Strömungskonditionierung durch die zweite Öffnung und dritte Öffnung bestimmt ist. Wie oben bereits ausgeführt, kann auch die erste Öffnung des äußeren Bauteils einen Beitrag zur dieser Strömungskonditionierung leisten. Je nach Strömungsdruck in dem Rückschlagventil kann dieses also die Strömungsrate gezielt beeinflussen.

Ersetzt man nun bspw. einen bekannten Flow-Divider in einem bekannten Brennstoffleitungssystem einer Gasturbine durch ein derartiges Rückschlagventil, kann dieses die einzelnen geodätischen Druckunterschiede in den Brennerzuleitungen verhältnismäßig gut ausgleichen. Bei verhältnismäßig niedrigen Strömungsraten sorgt die zweite Öffnung des inneren Bauteils für einen relativ hohen Druckverlust. Ist der Strömungsdruck in dem Rückschlagventil nun ausreichend hoch, ist der Beitrag des Säulendrucks in den Brennerzuleitungen zum zusätzlichen Gesamtströmungsdruck relativ gering und kann praktisch vernachlässigt werden. In anderen Worten sinkt der geodätische Einfluss auf den Gesamtdruck zunehmend mit dem Gesamtströmungsdruck. Wählt man hingegen die zweit Öffnung relativ klein, kann gewährleistet werden, dass auch bereits bei geringen Gesamtströmungsdrücken der geodätische Anteil gering ist. Erreicht nun der Strömungsdruck relativ hohe Werte, ist der Gesamtdruckverlust aufgrund der zweiten Öffnung alleine relativ groß und die Strömungskraftmaschine kann mitunter nicht mehr mit ausreichenden Mengen an Brennstoff versorgt werden. Insbesondere bei Volllast wäre der Druckverlust aufgrund lediglich der zweiten Öffnung des inneren Bauteils zu groß, so dass die Brennstoffpumpen den Druck nicht mehr bereitstellen könnten.

In diesem Fall sieht nun das erfindungsgemäße Rückschlagventil vor, dass die Strömungsrate erhöht wird, indem nämlich das innere Bauteil die dritte Öffnung freigibt und dadurch einen geringeren Strömungswiderstand bereitstellt. Mit anderen Worten, ermöglicht das Rückschlagventil eine strömungsangepasste Konditionierung des Strömungsmediums. Das vorliegende Rückschlagventil kann insofern auch als variable Blende betrachtet werden, welche bei sich ändernden Druckverhältnissen die Blendenöffnung geeignet einstellen lässt. Bei Strömungssystemen, die etwa durch Gravitationseinflüsse störungsbelastet sind, kann so bei niedrigeren Durchflussmengen eine verhältnismäßig gute Gleichverteilung über unterschiedlich geodätisch angeordnete Leitungsteile erreicht werden, wobei bei höheren Durchflussmengen die Gravitationseinflüsse nicht mehr wesentlich sind, jedoch die Gesamtströmungsrate erhöht werden kann.

Aufgrund der Einfachheit des Aufbaus des erfindungsgemäßen Rückschlagventils kann dieses auch verhältnismäßig kostengünstig hergestellt werden und unter großer Kosteneinsparung Flow-Divider etwa an einer Strömungskraftmaschine, wie einer Gasturbine ersetzen.

Gemäß einer ersten besonders bevorzugten Ausführungsform der Erfindung ist vorgesehen, dass die erste Öffnung größer ist als die zweite Öffnung, insbesondere größer als die Summe von zweiter Öffnung und dritter Öffnung. Die Öffnungen entsprechen hierbei dem durchschnittlichen Strömungsquerschnitt der jeweiligen Öffnungen. Ein solcher kann etwa geometrisch bestimmt werden, bspw. als effektiver Querschnitt der Öffnung, oder aber auch fluidtechnisch durch entsprechende Versuche, falls eine geometrische Bestimmung nicht ohne weiteres vorgenommen werden kann. Ist ausführungsgemäß die erste Öffnung größer als die zweite Öffnung, kann diese für die Strömungskonditionierung im Normalfall bei dem ersten Betriebszustand außer Acht gelassen werden. Ist die erste Öffnung zudem auch noch größer als die Summe von zweiter und dritter Öffnung kann dies typischerweise auch für den zweiten Betriebszustand der Fall sein. Damit lässt sich die Strömungseinstellung bzw. der Strömungswiderstand verhältnismäßig leicht aufgrund lediglich der zweiten Öffnung und dritten Öffnung bestimmen.

Weiterhin kann vorgesehen sein, dass das äußere Bauteil bevorzugt an der ersten Öffnung einen Dichtungssitz aufweist, welcher in dem ersten Betriebszustand mit einem Dichtungsbereich des inneren Bauteils dichtend abschließen kann, wobei der Dichtungsbereich insbesondere als Dichtungskegel ausgebildet ist. In anderen Worten kann so eine kontrollierte Strömungsbeeinflussung in dem Rückschlagventil erfolgen, wobei sich eindeutige Strömungsverhältnisse ausbilden lassen. Die Dichtung zwischen Dichtungssitz und Dichtungsbereich sorgen nämlich für eine sichere strömungstechnische Unterbrechung während des ersten Betriebszustandes zur dritten Öffnung hin.

Gemäß einer weiteren Ausführungsform der Erfindung ist vorgesehen, dass in dem zweiten Betriebszustand das innere Bauteil derart in dem äußeren Bauteil angeordnet ist, dass die Strömung auch durch die erste Öffnung begrenzt wird und sich auf die zweite Öffnung und die dritte Öffnung aufteilt. Hierbei ist natürlich besonders bevorzugt eine Ausführungsform, bei welcher der Querschnitt der ersten Öffnung größer ist als der Querschnitt der zweiten Öffnung. Die erste Öffnung kann also zur Gesamtströmungskonditionierung einen Anteil beitragen.

Gemäß einer weiteren besonders bevorzugten Ausführungsform der Erfindung ist vorgesehen, dass das äußere Bauteil und das innere Bauteil rotationssymmetrisch ausgebildet sind, wobei insbesondere die erste Öffnung und die zweite Öffnung koaxial zu einer gemeinsamen Rotationssymmetrieachse angeordnet sind. Aufgrund der Rotationssymmetrie lassen sich die Strömungsverhältnisse und damit die Strömungswiderstände in dem Rückschlagventil leichter kontrollieren und bestimmen. Zudem ist mit einer geringeren Verwirbelung im Bereich des Rückschlagventils zu rechnen, wodurch ebenfalls die Strömungswiderstände beeinflusst werden. Weiterhin erlaubt die Rotationssymmetrie von äußerem Bauteil und innerem Bauteil eine leichtere und günstigere Fertigung.

Gemäß einer Weiterführung dieser Idee ist vorgesehen, dass die Lagerung des inneren Bauteils in dem äußeren Bauteil derart ausgebildet ist, dass eine Verschiebung parallel zur gemeinsamen Rotationssymmetrieachse ermöglicht ist. Diese Verschiebung erfolgt damit in Strömungsrichtung, so dass eine Änderung der Betriebszustände durch die Strömung selbst besonders leicht herbeigeführt werden kann.

Weiterhin kann vorgesehen sein, dass eine Mehrzahl an dritten Öffnungen vorgesehen ist, welche in Umfangsrichtung senkrecht zur gemeinsamen Rotationsachse in dem inneren Bauteil angeordnet sind. Durch diese symmetrische Anordnung der Mehrzahl an dritten Öffnungen ergibt sich wiederum ein verhältnismäßig gleichmäßiger Strömungsfluss in dem Rückschlagventil unter Vermeidung von unnötigen Verwirbelungen. Sind die dritten Öffnungen zudem noch geometrisch so ausgebildet, dass sie den Strömungsfluss unterstützen und einen geringen Strömungswiderstand bereitstellen, kann ein verlustarmes Rückschlagventil bereitgestellt werden.

Gemäß einer besonders bevorzugten Ausführungsform der Erfindung ist vorgesehen, dass das innere Bauteil durch ein Kraftelement derart beaufschlagt ist, dass das innere Bauteil gegen das äußere Bauteil im ersten Betriebszustand gepresst wird und insbesondere dadurch gleichzeitig die dritte Öffnung strömungstechnisch verschlossen wird. In anderen Worten steht also die dritte Öffnung nicht zur Strömungskonditionierung zur Verfügung wenn diese verschlossen ist. Das Kraftelement kann hierbei weiterhin so eingestellt sein, dass ein Übergang von erstem Betriebszustand zu zweitem Betriebszustand bei einem vorbestimmten Strömungsdruck erfolgt. Ebenso kann das Kraftelement den zeitlichen Verlauf zwischen erstem Betriebszustand und zweitem Betriebszustand bestimmen. Ein solches Kraftelement ist bspw. als Federkraftelement ausgeführt, welches zwischen innerem Bauteil und äußerem Bauteil angeordnet ist.

Gemäß einer Weiterführung dieser Ausführungsform kann vorgesehen sein, dass im zweiten Betriebszustand eine Gegenkraft durch die Strömung auf das innere Bauteil einwirkt, welche eine Verschiebung des inneren Bauteils in dem äußeren Bauteil zur Folge hat und dadurch die dritte Öffnung freigibt. In anderen Worten steht die dritte Öffnung nun zur Strömungskonditionierung im Rahmen der Funktion des gesamten Rückschlagventils zur Verfügung.

Gemäß einer weiteren bevorzugten Ausführungsform der Erfindung ist vorgesehen, dass das Rückschlagventil dazu ausgebildet ist, bei Betrieb derart angeordnet zu werden, dass das innere Bauteil durch seine eigene Gewichtskraft während des ersten Betriebszustands gegen das äußere Bauteil gepresst wird. Insbesondere ist die Anordnung hierbei derart vorzunehmen, dass die Strömungsrichtung entgegen der Richtung des Erdgravitationsfeldes angeordnet ist, bzw. wenigstens eine solche Richtungskomponente aufweist. Die eigene Gewichtskraft des inneren Bauteils sorgt also zunächst dafür, dass das Rückschlagventil lediglich in dem ersten Betriebszustand betrieben werden kann. Lediglich dann, wenn das Strömungsmedium einen ausreichend hohen Strömungsdruck auf das innere Bauteil ausübt, kann dieses verlagert werden, und einen größeren Strömungsquerschnitt freigeben.

Gemäß einer Weiterführung dieser Idee ist vorgesehen, dass im zweiten Betriebszustand eine Gegenkraft durch die Strömung, bzw. deren Strömungsdruck auf das innere Bauteil einwirkt, welche eine Verschiebung des inneren Bauteils in dem äußeren Bauteil zur Folge hat und dadurch die dritte Öffnung freigibt. In anderen Worten ist diese Gegenkraft also als Strömungsdruck ausreichend groß, um die Verschiebung des inneren Bauteils im äußeren Bauteil zu bewirken.

Nachfolgend soll die Erfindung anhand von einzelnen Figuren im Detail näher erläutert werden. Hierbei ist darauf hinzuweisen, dass die Figuren lediglich schematisch zu verstehen sind und damit keine Einschränkung der Ausführbarkeit der Erfindung zur Folge haben.

Weiterhin ist darauf hinzuweisen, dass alle in den Figuren mit gleichen Bezugszeichen versehenen Bauteile gleiche technische Wirkung aufweisen.

Fernerhin ist darauf hinzuweisen, dass die nachfolgenden technischen Merkmale in beliebiger Reihenfolge und Kombination miteinander beansprucht werden, soweit diese Kombination, die der Erfindung zugrundeliegenden Aufgaben lösen kann.

Hierbei zeigen:
- Figur 1: eine seitliche Querschnittsansicht durch eine erste Ausführungsform eines erfindungsgemäßen Rückschlagventils in erstem Betriebszustand B1;
- Figur 2: eine seitliche Schnittansicht durch die in Figur 1 gezeigte Ausführungsform des erfindungsgemäßen Rückschlagventils 1 während eines zweiten Betriebszustandes B2.
- Figur 3: eine graphische Darstellung der Änderung des Druckverlustes in dem Rückschlagventil bei Änderung vom Betriebszustand B1 zum Betriebszustand B2.

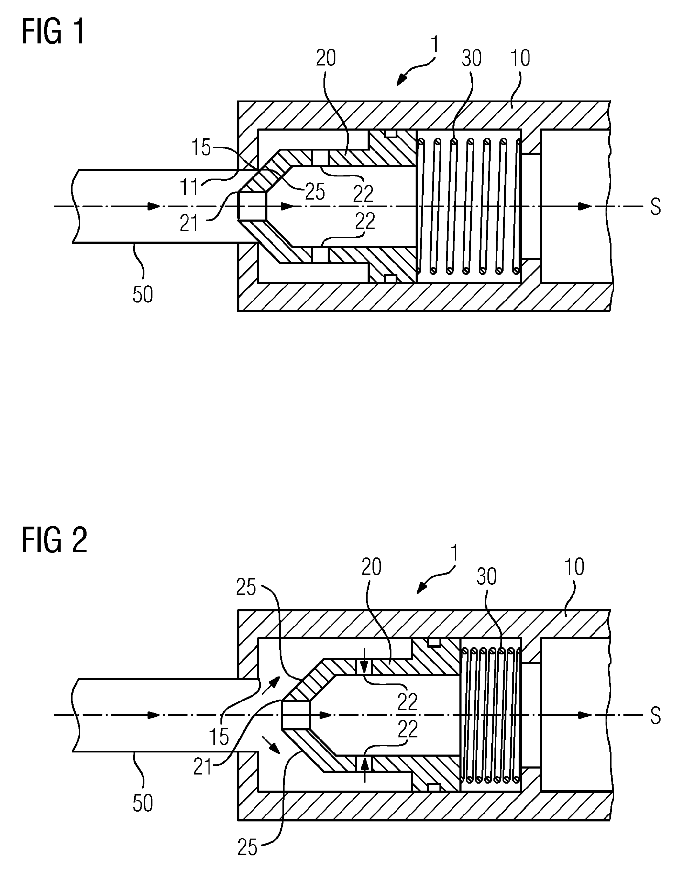

Figur 1 zeigt eine seitliche Schnittansicht durch eine Ausführungsform des erfindungsgemäßen Rückschlagventils 1, welches neben einem äußeren Bauteil 10 mit erster Öffnung 11 auch ein inneres Bauteil 20 mit zweiter Öffnung 21 und dritter Öffnung 22, bzw. dritten Öffnungen 22 aufweist. Das innere Bauteil 20 ist hierbei in dem äußeren Bauteil 10 verschiebbar gelagert, wobei die Verschiebungsrichtung parallel entlang der durch die Pfeile gekennzeichneten Strömungsrichtung des Strömungsmediums verläuft. Vorliegend gezeigt ist ein erster Betriebszustand B1, in welchem das innere Bauteil 20 durch ein Kraftelement 30 sowohl gegen das äußere Bauteil 10 gepresst wird, so dass zwischen beiden im Bereich der ersten Öffnung 11 ein Dichtungsabschnitt entsteht. Der Dichtungsabschnitt ist durch einen Dichtungssitz 15 des äußeren Bauteils 10 sowie einen Dichtungsbereich 25 des inneren Bauteils 20 definiert. Der Dichtungssitz 15 kann hierbei etwa als angeschrägter Bereich ausgebildet sein, an welchen die Schräge eines als Dichtungsbereich 25 ausgebildeten Dichtkegels anliegen kann. Aufgrund des Presskontaktes vermeiden beide Bauteile einen Durchtritt des Strömungsmediums hin zu der dritten Öffnung 22 des inneren Bauteils 20. Gleichzeitig stellt der Überstand des als Dichtkegel ausgebildeten Dichtungsbereichs 25 ein Strömungshindernis für das Strömungsmedium dar, so dass bei Erhöhung des Strömungsdruckes auch ein zunehmender Druck auf das innere Bauteil 20 ausgeübt wird. Ist der Strömungsdruck, wie vorliegend dargestellt, während des ersten Betriebszustandes B1 ausreichend gering, definiert also lediglich die zweite Öffnung 21 den effektiven Strömungsquerschnitt durch das Rückschlagventil 1.

Nimmt nun der Strömungsdruck des Strömungsmediums zu, kann die auf das innere Bauteil 20 einwirkende Kraft das Kraftelement 30 so weit anspannen, das nun die Dichtung zwischen äußerem Bauteil 10 und innerem Bauteil 20 im Bereich des Dichtungssitzes 15 bzw. des Dichtungsbereiches 25 nicht mehr gewährleistet ist, und ein Durchtritt des Strömungsmediums hin zu der dritten Öffnung 22, bzw. zu den dritten Öffnungen 22 des inneren Bauteils 20 erfolgen kann. In anderen Worten wird also nun der effektive Strömungsquerschnitt des Rückschlagventils sowohl durch die zweite Öffnung wie auch durch die dritte Öffnung 22 bestimmt. Gleichzeitig wird aufgrund der Strömungsbegrenzung durch das äußere Bauteil 10 und der Ausbildung der ersten Öffnung 11 auch eine Strömungsbegrenzung durch die erste Öffnung 11 erreicht, da das Strömungsmedium zwischen erster Öffnung und Dichtungsbereich 25 des inneren Bauteils 20 hin zu der dritten Öffnung 22 strömt. Je nach zunehmendem Öffnungszustand und relativen Größenverhältnissen zwischen diesem Öffnungsbereich und der Größe der dritten Öffnung 22 trägt die erste Öffnung 11 zur Strömungskonditionierung unterschiedlich bei.

Die beiden oberen Figuren zeigen ein Rückschlagventil 1, wie es typischerweise von einem Brennstoffleitungssystem umfasst ist. Dieses ist abschnittsweise und schematisch durch eine Strömungsbegrenzung dargestellt. Weiterhin kann ein solches Brennstoffleitungssystem 50 durch eine Gasturbine 100 (vorliegend nicht gezeigt) umfasst sein.

Weiterhin ist den beiden oberen Figuren, die dem äußeren Bauteil 10 und dem inneren Bauteil 20 gemeinsame Rotationssymmetrieaschse S gezeichnet, entlang welcher ebenfalls das innere Bauteil 20 durch den Strömungsdruck verschieblich bewegt werden kann.

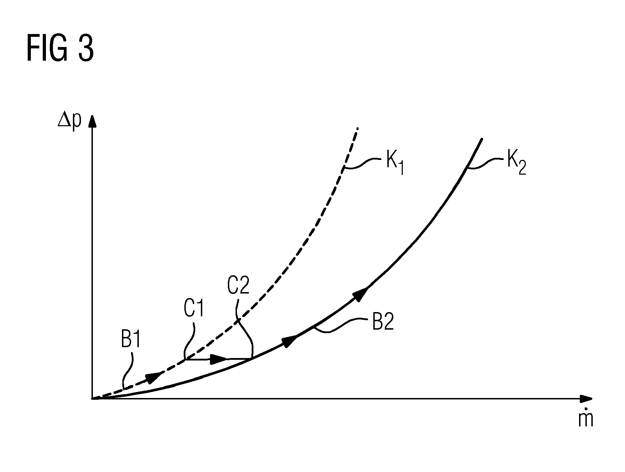

Figur 3 zeigt eine funktionelle Darstellung des absoluten Druckverlustes über das Rückschlagventil 1 in Abhängigkeit des Massenstroms des Strömungsmediums dar. Hierbei sind zwei Kurven K1 und K2 gezeigt, welche den typischen Verlauf des Druckverlustes bei jeweils einem konstanten Öffnungsquerschnitt darstellen. Die Kurve K1 korrespondiert hierbei mit einem kleineren Öffnungsquerschnitt, wenn verglichen mit der Kurve K2. Wird also bspw. das in den Figuren 1 und 2 gezeigte Rückschlagventil 1 bei geringen Massenströmen betrieben, ändert sich der absolute Druckverlust entlang der Kurve K1 im Sinne eines ersten Betriebszustandes B1. Wird nun jedoch der Strömungsdruck so groß, dass die dritte Öffnung 22 zusätzlich zur zweiten Öffnung 21 freigegeben wird, wird der Druckverlust von der Kurve K1 abweichen und sich in Richtung Kurve K2 bewegen. In anderen Worten gibt es eine Abzweigung C1 an der Kurve K1, an welcher von dem bisherigen typischen Kurvenverlauf abgewichen wird. Ist nun das innere Bauteil 20 bei ausreichend hohem Strömungsdruck in seine Endposition verbracht, ist ein zweiter Betriebszustand B2 hergestellt, bei welchem auch die dritte Öffnung 22 zur Strömungskonditionierung der Gesamtströmung beiträgt, mündet der Verlauf in eine zweite Abzweigung C2 der zweiten Kurve K2. Bei sich weiter erhöhenden Strömungsdrücken wird sich dieser effektive Querschnitt nicht weiter ändern, da eine weitere Verschiebung nicht erfolgen wird. Insofern wird nach Erreichen der Endposition des inneren Bauteils 20 in dem äußeren Bauteil 10 der Druckverlustverlauf weiter durch eine zweite Kurve K2 beschrieben.

Weitere Ausführungsformen ergeben sich aus den Unteransprüchen.

## Patentansprüche

1. Rückschlagventil (1) umfassend ein strömungsbegrenzendes äußeres Bauteil (10) mit einer ersten Öffnung (11) und ein darin angeordnetes strömungskonditionierendes inneres Bauteil (20) mit einer zweiten Öffnung (21) und einer dritten Öffnung (22), wobei das innere Bauteil (20) in dem äußeren Bauteil (10) beweglich gelagert ist und in einem ersten Betriebszustand (B1) derart in dem äußeren Bauteil (10) angeordnet ist, dass nur die zweite Öffnung (21) den Öffnungsquerschnitt des gesamten Rückschlagventils (1) bestimmt und in einem zweiten Betriebszustand (B2) derart in dem äußeren Bauteil (10) angeordnet ist, dass neben der zweiten Öffnung (21) auch die dritte Öffnung (22) den Öffnungsquerschnitt des gesamten Rückschlagventils (1) mitbestimmt.

2. Rückschlagventil nach Anspruch 1,
**dadurch gekennzeichnet, dass** die erste Öffnung (11) größer ist als die zweite Öffnung (21), insbesondere größer als die Summe von zweiter Öffnung (21) und dritter Öffnung (22).

3. Rückschlagventil nach einem der Ansprüche 1 oder 2,
**dadurch gekennzeichnet, dass** das äußere Bauteil (10), bevorzugt an der ersten Öffnung (11) einen Dichtungssitz (15) aufweist, welcher in dem ersten Betriebszustand (B1) mit einem Dichtungsbereich (25) des inneren Bauteils (20) dichtend abschließen kann, wobei der Dichtungsbereich (25) insbesondere als Dichtungskegel ausgebildet ist.

4. Rückschlagventil nach einem der vorhergehenden Ansprüche,
**dadurch gekennzeichnet, dass** in dem zweiten Betriebszustand (B2) das innere Bauteil (20) derart in dem äußeren Bauteil (10) angeordnet ist, dass die Strömung auch durch die erste Öffnung (11) begrenzt wird und sich auf die zweite Öffnung (21) und die dritte Öffnung (22) aufteilt.

5. Rückschlagventil nach einem der vorhergehenden Ansprüche,
**dadurch gekennzeichnet, dass** das äußere Bauteil (10) und das innere Bauteil (20) rotationssymmetrisch ausgebildet sind, wobei insbesondere die erste Öffnung (11) und die zweite Öffnung (21) koaxial zu einer **ge**meinsamen Rotationssymmetrieachse (S) angeordnet sind.

6. Rückschlagventil nach Anspruch 5,
**dadurch gekennzeichnet, dass** die Lagerung des inneren Bauteils (20) in dem äußeren Bauteil (10) derart ausgebildet ist, dass eine Verschiebung parallel zur gemeinsamen Rotationssymmetrieachse (S) ermöglicht ist.

7. Rückschlagventil nach einem der Ansprüche 5 oder 6,
**dadurch gekennzeichnet, dass** eine Mehrzahl an dritten Öffnungen (22) vorgesehen ist, welche in Umfangsrichtung senkrecht zur gemeinsamen Rotationssymmetrieachse (S) in dem inneren Bauteil (20) angeordnet sind.

8. Rückschlagventil nach einem der vorhergehenden Ansprüche,
**dadurch gekennzeichnet, dass** das innere Bauteil (20) durch ein Kraftelement (30) derart beaufschlagt ist, dass das innere Bauteil (20) gegen das äußere Bauteil (10) im ersten Betriebszustand (B1) gepresst wird und insbesondere dadurch gleichzeitig die dritte Öffnung (22) strömungstechnisch verschlossen wird.

9. Rückschlagventil nach Anspruch 8,
**dadurch gekennzeichnet, dass** im zweiten Betriebszustand (B2) eine Gegenkraft durch die Strömung auf das innere Bauteil (20) einwirkt, welche eine Verschiebung des inneren Bauteils (20) in dem äußeren Bauteil (10) zur Folge hat und dadurch die dritte Öffnung (22) freigibt.

10. Rückschlagventil nach einem der vorhergehenden Ansprüche,
**dadurch gekennzeichnet, dass** das Rückschlagventil (1) dazu ausgebildet ist, bei Betrieb derart angeordnet zu werden, dass das innere Bauteil (20) durch seine eigene Gewichtskraft während des ersten Betriebszustands (B1) gegen das äußere Bauteil (10) gepresst wird.

11. Rückschlagventil nach Anspruch 10,
**dadurch gekennzeichnet, dass** im zweiten Betriebszustand (B2) eine Gegenkraft durch die Strömung auf das innere Bauteil (20) einwirkt, welche eine Verschiebung des inneren Bauteils (20) in dem äußeren Bauteil (10) zur Folge hat und dadurch die dritte Öffnung (22) freigibt.

12. Brennstoffleitungssystem umfassend ein Rückschlagventil (1) nach einem der vorhergehenden Ansprüche, wobei das Rückschlagventil (1) zur Strömungskonditionierung in dem Brennstoffleitungssystem (50) vorgesehen ist.

13. Gasturbine (100) umfassend ein Brennstoffleitungssystem (50) gemäß Anspruch 12, welches dazu ausgebildet ist, die Gasturbine (100) mit Brennstoff zu versorgen.
